## Europäisches Patentamt
## European Patent Office
## Office européen des brevets

(19)

(11) Publication number: **0 147 857**
**A2**

(12)

# EUROPEAN PATENT APPLICATION

(21) Application number: **84116392.6**

(22) Date of filing: **27.12.84**

(51) Int. Cl.⁴: **G 06 F 15/16**
**G 06 F 15/62**

(30) Priority: **28.12.83 JP 246936/83**

(43) Date of publication of application:
**10.07.85 Bulletin 85/28**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Matsushima, Hitoshi**
**13-18, Sunakawamachi-1-chome**
**Tachikawa-shi(JP)**

(72) Inventor: **Ueda, Hirotada**
**22-49, Nishimachi-2-chome**
**Kokubunji-shi(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Parallel data processing system.**

(57) A parallel data processing system comprising a control means (3-1), a plurality of processing means (3-2) controlled by said control means and adapted to perform parallel data processing, memory means provided correspondingly to said processing means and adapted to store data for corresponding processing means, and ring bus means (3-3) connecting said memory means in a ring configuration so that data is shifted along the ring bus. Each of the processing means performs data processing based on data transferred to the corresponding memory means.

./...

# FIG. 3

## PARALLEL DATA PROCESSING SYSTEM

The present invention relates to a parallel data processing system and, particularly, to an image processing system incorporating a plurality of processors dealing with image data.

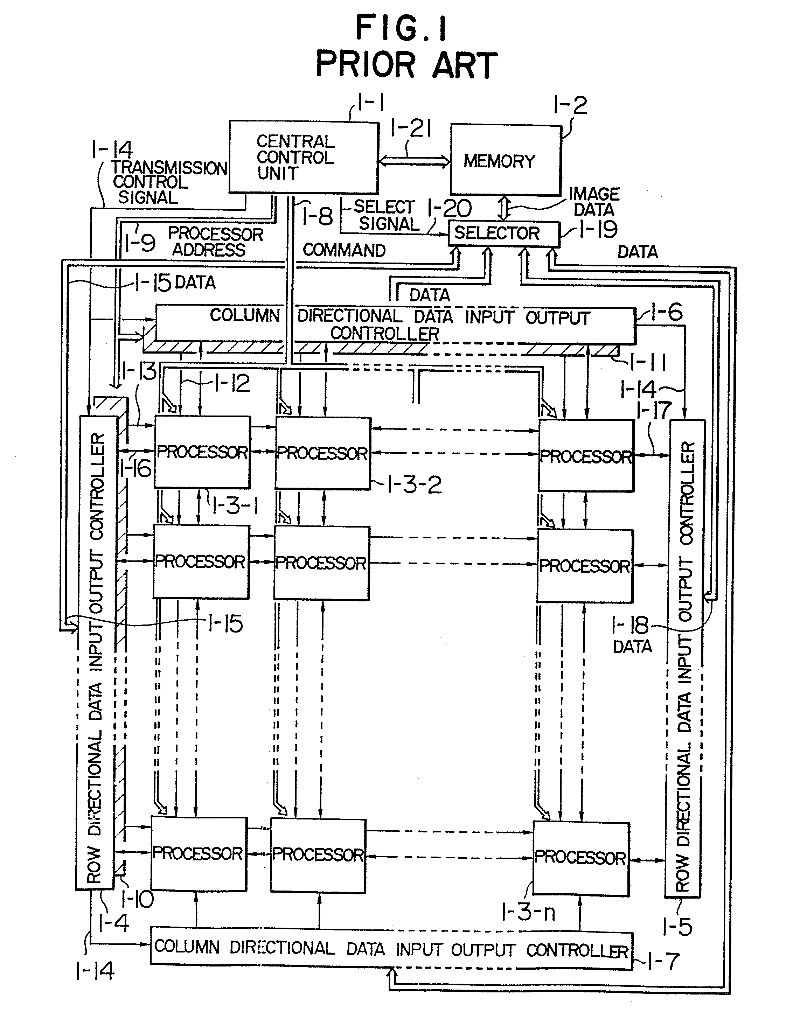

One method for the speed-up of image processing, which has been practiced conventionally, is the arrangement of processors in a matrix configuration so that image data is supplied to all processors concurrently and they perform computations in parallel. A typical example of such systems is ILLIAC IV developed in U.S.A. (cited in publication entitled "Computer System Technology", T. Motooka, p. 119, Ohm-sha, Japan). The basic structure of this system is as shown in Fig. 1, in which the principal components are central control unit 1-1, memory 1-2 and multiple processors 1-3-1, 1-3-2, ..., 1-3-n. Because of its 2-dimensional arrangement of processors identical to the 2-dimensional arrangement of image data, the system has an extremely effective parallel processing ability in so-called pixelwise operations such as thresholding and arithmetic operations between image data that are implemented frequently in image processing. In order to provide this effectiveness also in so-called local area processing such as spatial differentiation, this conventional system has the horizontal and vertical 4-way connections among the matrix-arranged processors, or this 4-way connections are duplicated by additional diagonal 4-way connections (upper rightward, upper leftward, lower rightward and lower leftward connections), i.e., total of 8-way connections, although the latter is not shown in Fig. 1. In these cases, processors located in outermost sections of the processor array have less number of partners to communicate, and it becomes possible for these processors to have data transaction with the memory 1-2.

The process of inter-processor communication will be described for the case, as an example, of data transfer among processors in the direction from left to right in Fig. 1. Initially, the central control unit 1-1 issues the rightward data transfer control signal to row directional data input/output controllers 1-4 and 1-5 and column directional data input/output controllers 1-6 and 1-7 over signal line 1-14. In response to this control signal, the row directional data input/output controller 1-4 operates to control the signal lines so that image data in the memory 1-2 is transferred to the controller 1-4 over data bus 1-15 and then to the leftmost processors over input lines 1-16. At the same time, another row directional data input/output controller 1-5 controls the signal lines so that data from the rightmost processors is sent over signal lines 1-17 and then data bus 1-18. The remaining processors are controlled to transfer data to respective right adjoining processors. During the above operation, column directional data input/output controllers 1-6 and 1-7 are not activated. The reverse operation takes

- 3 -

0147857

place when data is transferred from right to left. For the vertical movement of data among the processors, the column directional data input/output controllers 1-6 and 1-7 operate identically to the case mentioned above in place of the row directional data input/output controllers 1-4 and 1-5.

The above data shift operation in the processor array is implemented also in fetching specific data for each processor from the memory 1-2. If outermost processors need not make reference to the memory 1-2, the data input/output controller sets up a predetermined specific boundary value, e.g., "0" on the input lines 1-16 and 1-12 so that it is fed to the outermost processors. In case it is intended to link processors located at the leftmost and rightmost columns or located at the top and bottom rows to form ring connections, it is accomplished by connecting pairs of lines to be linked within the selector 1-19 which controls data transfer between the row data input/output controllers and memory 1-2 under control of the central controller 1-1 through signal line 1-20, or by connecting data bus between input/output controllers 1-4 and 1-5, or between 1-6 and 1-7. If the selector 1-19 has too many input/output lines, it is desirable to assemble the selector 1-19 and data input/output controllers 1-4 through 1-7 altogether into one circuit. The control for the processor array in this case is substantially identical to the case described above. If data transfer with the memory 1-2 in synchronism with data transfer among processors is needed, the memory 1-2 is controlled using the signal lines 1-21.

In order to control processors individually in such a case that only specific ones of processors need to operate, each processor is given a physical row address and column address, and both addresses are specified through row address lines 1-13 and column address lines 1-12, the number of lines being dependent on the number of rows and columns forming the processor array. The operation of this section will be described in the following.

Initially, address information sent from the central control unit 1-1 over processor address bus 1-9 is decoded by row address controller 1-10 and column address controller 1-11. The address controllers 1-10 and 1-11 are operable to bring a selected one of row address lines or column address lines into on-state or off-state, or bring all address lines into on-state. Each processor is activated in accordance with the state of row and column address lines connected to it. Generally, a processor with its both address lines being in on-state is enabled to receive command words on bus 1-8 from the central controller 1-1. Through this address scheme, a specific processor, a group of processors with a common row address or column address, or all processors can be activated. By being addressed under control as mentioned above, active processor(s) decode command words sent from the central control unit 1-1 and execute the commands.  These are the operations of the conventional system shown in Fig. 1.

Through the foregoing arrangement, the conventional system is advantageous in speed in a complex image processing in which reference to neighbouring pixels is needed.  On the other hand, however, the arrangement of connection with the peripheries in the foregoing conventional system determines invariably the number of rows and columns of the processor array.  For example, in a propagational process which is very frequently used in an image processing called distance transformation, only a part of the array can be processed at one time, and the effect of parallel processing is not fulfilled.

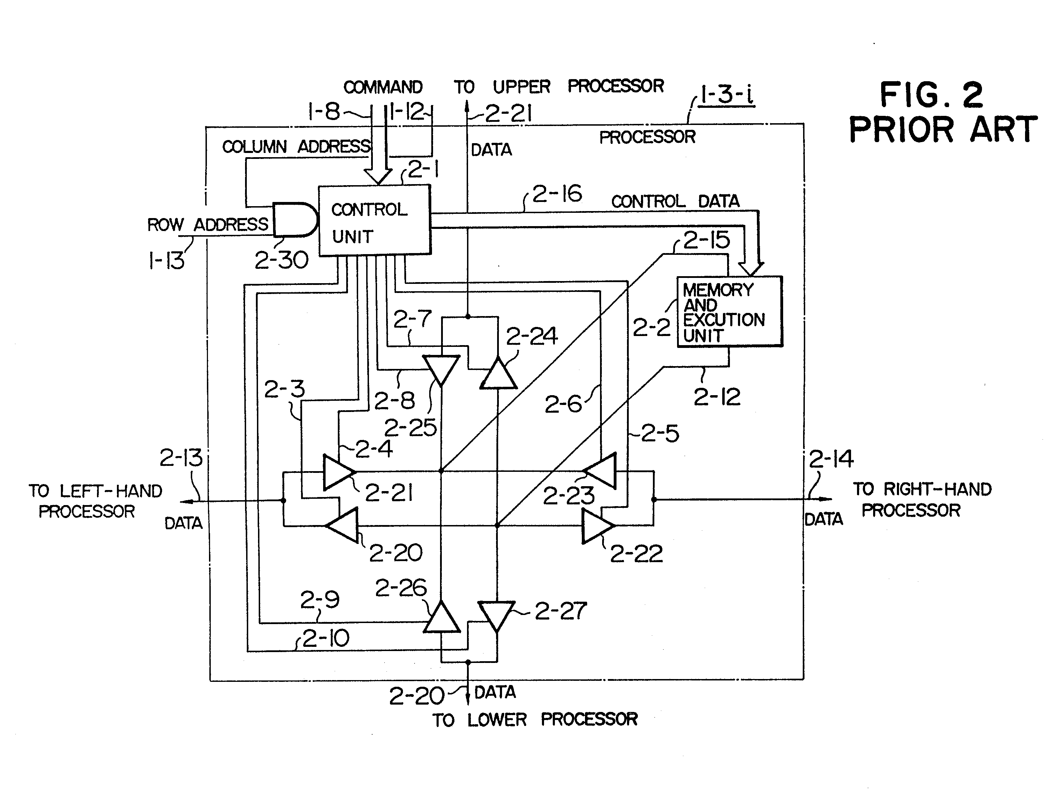

Another drawback of the foregoing system is a large number of signal lines and a large scale hardware. This point will be explained in connection with Fig. 2 showing the detailed arrangement of one of processors, generically referred to by 1-3-i, shown in Fig. 1.  The processor consists of a control unit 2-1, a memory/execution unit 2-2, gates 2-20 through 2-27 for transferring data with other processors, data lines 2-13, 2-14, 2-20 and 2-21 connecting the processor to the adjoining processors, and other signal lines.  The memory/execution unit 2-2 may include a random access memory of relatively large capacity as a temporary storage for data.  The processor interprets a command word provided through the bus 1-8 using the control unit 2-1 and, if it is a command of memory access operation or arithmetic/logic operation, executes the command using the memory/ execution unit 2-2 in accordance with control data supplied from the control unit 2-1 over the control data bus 2-16. If, in another case, the command is a processor control command such as the system reset and system start-up commands, it is executed within the control unit 2-1. In case the command is an inter-processor data transfer command, gates 2-20 through 2-27 are controlled by gate control signals 2-3 through 2-10 and, at the same time, input data on line 2-15 to the memory/execution unit 2-2 is processed to produce output data on line 2-12. For data transfer between adjoining processors, data lines 2-13, 2-14, 2-21 and 2-20 are used for leftward, rightward, upward and downward transfers, respectively.

For the outermost processors one of 4-way data transfer lines, or for the corner processors two of lines, is connected to the row data input/output controller 1-4 or 1-5, or column data input/output controller 1-6 or 1-7, or two of these in the case of corner processors. Because of relatively large bits count of transferred data in general, a considerably large number of signal lines and buffer gates are needed.

The following describes the operation of the processor shown in Fig. 2 transferring data with the adjoining processors in the direction from right to left. In response to the leftward data transfer command on bus 1-8, the control unit 2-1 issues active gate control signals on lines 2-3 and 2-6 and inactive control signals on the remaining gate lines. In consequence, the gate 2-20 is enabled to conduct output data on line 2-12 from the memory/execution unit 2-2 to the data line 2-13 connected to the left-adjoining processor. At this time, the gates 2-22, 2-24 and 2-27 for sending output data to the right-hand, upper and lower processors are disabled to conduct data.

On the other hand, data on line 2-14 from the right-adjoining processor is conducted through the gate 2-23 to the input data line 2-15 of the memory/execution unit 2-2. At this time, the gates 2-21, 2-25 and 2-26 for receiving data from the left-hand, upper and lower processors are disabled. And gate 2-30 is used to specify a specific processor by receiving a corresponding row address 1-13 and column address 1-12.

As shown in the figure, each processor needs a large number of data lines, resulting in a large scale hardware. Despite of the general recognition that the celluler-type parallel processing is suitable for being implemented by a VLSI arrangement, the system is rather bulky and expensive.

As described above, the conventional system involves many processes with extremely low effectiveness of parallel processing, as well as a complex and expensive structure, and therefore the prevalence of parallel data processing system was limited.

It is an object of the present invention to provide a parallel data processing system arranged in an arrayed structure, wherein internal processors are linked and controlled in such a way as allowing the variation in the number of rows and columns of the processor array.

Another object of the invention is to provide a parallel data processing system with a compact and simplified hardware.

In order to achieve the above objectives, the internal processors of the inventive system are connected in a ring configuration, thereby moving image data and processed data along the ring. The inventive arrangement reduces the amount of hardware needed for the inter-processor connection and controls the movement of data along the ring, thereby allowing 4-way or 8-way data transfer depending on the array configuration. The movement value can be calculated from the number of rows and columns required, and processor arrays, with their number of rows and columns expressed by two numerals which factorize the number of processors available, can be realized. The above-mentioned structure does not suffice the treatment for the outermost processors in the array, and on this account, the present invention features in addition to the ring configuration to have a memory within each processor for storing its own row address and column address and a control circuit for determining as to whether or not the processor uses data moving along the ring depending on the memory contents.

According to this invention, a parallel data processing system in arrayed structure capable of fast operation in dealing with broad image processing from a simple pixelwise operation to a complex propagative operation can be realized.

The present invention will become apparent from the following detailed description taken in conjunction with the accompanying drawings, in which:

Fig. 1 is a block diagram showing the conventional parallel data processing system;

Fig. 2 is a block diagram showing in more detail the internal arrangement of each processor used in the system shown in Fig. 1;

Fig. 3 is a block diagram showing the system arrangement embodying the present invention;

Fig. 4 is a diagram explaining the partitioning of image in processing image data by the arrangement of Fig. 3;

Fig. 5 is a block diagram used to explain the control of the ring bus shown in Fig. 3; and

Fig. 6 is a block diagram used to explain the data transfer on the ring bus.

An embodiment of the present invention will now be described in detail with reference to the drawings.

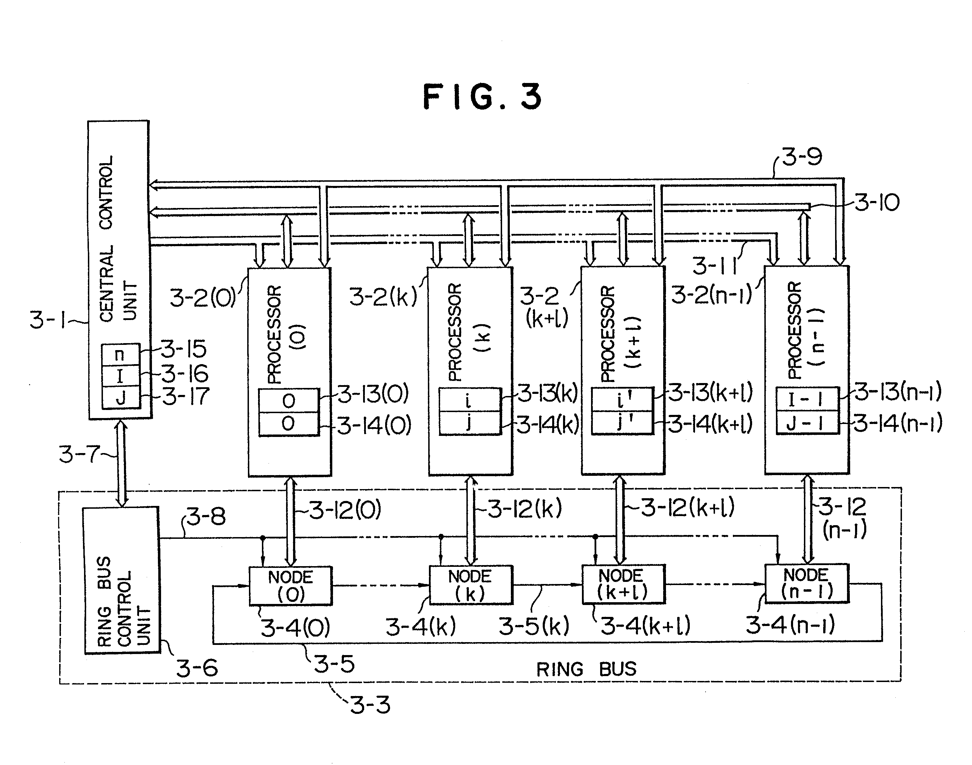

Fig. 3 shows the parallel data processing system with the provision of a ring bus for linking $n$ processors in a ring configuration.  The system is principally consists of central control unit 3-1, processors 3-2(0), 3-2(1), ..., 3-2(n-1), and ring bus 3-3. The ring bus 3-3 is made up of ring bus node registers 3-4(0), 3-4(1), ..., 3-4(n-1) capable of direct data transfer with corresponding processors through signal buses 3-12(0), 3-12(1), ..., 3-12(n-1), a ring bus line 3-5 through which the node registers 3-4 are linked with each other, a ring bus control unit 3-6 for controlling the loading or transfer of data in the node registers, and a set of signal lines 3-8 used to deliver control information to each node register 3-4. The ring bus control unit 3-6 determines the number of steps of data movement among the node registers along the ring bus line 3-5 in accordance with the control signal on bus 3-7 from the central control unit 3-1, and sends shift clock pulses corresponding in number to the data movement value over the signal line 3-8 to each node register 3-4. Control bus 3-9, data bus 3-10 and address bus 3-11 are provided so that the central control unit 3-1 controls and transfers data with each processor 3-2. The processors are given logical numbers in the order consistent with the order of linkage on the ring bus of node registers 3-4 associated with respective processors.

Through the use of the address bus 3-11, a processor with a specific logical number of k, i.e., processor 3-2(k), can be made access. In the following discussion, symbol k represents generically one of numbers 0 through n-1. The address bus 3-11 may be provided with functions not only to designate a specific processor 3-2(k), but to designate all processors simultaneously, as will be described later. A processor 3-2(k) has memories or registers (will be termed expediently "registers" hereinafter) 3-13(k) and 3-14(k) for storing at least two numbers. The central control unit 3-1 also has registers or memories (again will be termed expediently "registers") 3-15, 3-16 and 3-17 for storing at least three numbers. The register 3-15 stores the number $\underline{n}$ of processors, and the registers 3-16 and 3-17 store two positive integers that factorize the number $\underline{n}$. These two integers can be altered at any time through the program in the central control unit 3-1. The central control unit 3-1 can readily be realized using, for example, a commonly available microprocessor.

In the above arrangement, the registers 3-15, 3-16 and 3-17 in the central control unit 3-1 and the registers 3-13(k) and 3-14(k) in processors are used when the system of Fig. 3 operates to process an image divisionally.

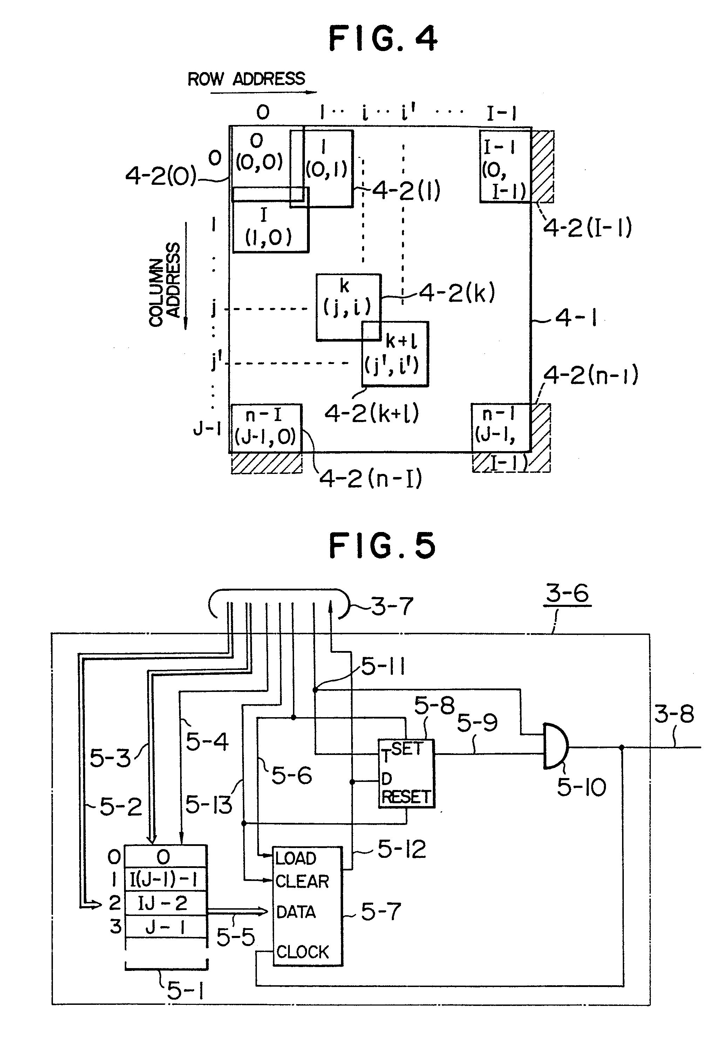

The following describes in detail the processing of image by the inventive system. First, the partitioning of image will be explained using Fig. 4. The figure shows an example of image partitioning, in which image data 4-1 is partitioned into I x J sub-image areas 4-2(0), 4-2(1), ..., 4-2(k), ..., 4-2(n-1) with J rows and I columns. Here, I and J are two numbers stored in the central control unit 3-1 in Fig. 3. Namely, these numbers satisfy the relation I x J = n.

The sub-image areas 4-2(0), 4-2(1), ..., 4-2(n-1) are dimensioned to have a proper marginal portion overlapping on the adjoining sub-image area. The amount of margin is determined depending on the image processing operation. For example, the pixelwise process such as thresholding does not need any overlapping marginal portion, whereas the filtering process needs the overlap of the amount at least the longitudinal or lateral length of the filter subtracted by one. In actual, alteration of margin at every process causes an increased software and processing time, and it is preferable in general to use the maximum value of margin needed by the overall image processing in each application field, or use the maximum value multiplied by a power of 2. Depending on the image size, outermost sub-image areas can cover an excessive area as shown by the hatched section of the sub-image areas 4-2(I-1), 4-2(n-I) and 4-2(n-1) in Fig. 4, and in such cases the process results for the excessive areas may simply be ignored.

The sub-images partitioned in this method are given positional addresses (0, 0), (0, 1), ..., (J-1, I-1) made up of row addresses 0, ..., J-1, and column addresses 0, ..., I-1.

There is a relationship between the value of $k$ of a sub-image 4-2(k) and values $i$ and $j$ of address (j, i), as follows.

$$j = [\frac{k}{I}] \qquad \ldots\ldots (1)$$

$$i = k-jI \qquad \ldots\ldots (2)$$

where brackets [ ] denote the Gaussian symbol. In this

0147857

embodiment, parallel processing by the processors takes place in such a way that a processor with a logical number $k$, i.e., processor 3-2(k), deals with a sub-image area 4-2(k) in principle. For merging the overlapping sections of sub-image areas, adjoining processors transact data with each other.

The following describes in detail the inter-processor data transfer operation carried out by the embodiment of the invention. Initially, each of processors 3-2(0), 3-2(1), ..., 3-2(n-1) is given an individual logical number $k$. This procedure is implemented by the central control unit 3-1, which addresses each processor 3-2(k) to set the logical number $k$.

Subsequently, each processor 3-2(k) is operated on to calculate the values of $i$ and $j$ from the value of $k$ using the following equations.

$$j = [\frac{k}{I}] \qquad \qquad \ldots\ldots (3)$$

$$i = k-jI \qquad \qquad \ldots\ldots (4)$$

where brackets [ ] denote the Gaussian symbol. The processor 3-2(k) stores the results for $i$ and $j$ in its registers 3-13(k) and 3-14(k), respectively. The set of $i$ and $j$ represents the address of a processor 3-2(k), and it corresponds to the address of the above-mentioned sub-image 4-2(k). Thus, the processing of an image is shared by the processors in this correspondence.

The result of process is transferred among processors through the ring bus unit 3-3, in such a way that a processor 2(k) with an address (j, i) loads data to the ring bus node register 3-4(k) connected with it, the data is moved on the ring bus by $\ell$ steps up to a node register 3-4(k+$\ell$), and then the data is fetched to the corresponding processor 3-2(k+$\ell$). Assuming that the processor 3-2(k+$\ell$) has contents of i' and j' in its registers 3-13(k+$\ell$) and 3-14(k+$\ell$), respectively, the following relationship is held between the value of k+$\ell$ and values of i' and j'.

$$j' = [\frac{k+\ell}{I}] \qquad \ldots\ldots (5)$$

$$i' = (k+\ell)-j'I \qquad \ldots\ldots (6)$$

The value $\ell$ will be called the amount of shift. Through the foregoing operation, data is transferred from a processor with address (j, i) to another processor with address (j', i'). In other words, the result of process for a sub-image area 4-2(k) at address (j, i) can be used for the process of sub-image area 4-2(k+$\ell$) with address (j', i').

As mentioned earlier, the conventional system shown in Fig. 1 is capable of data transfer in four ways between adjoining processors. Namely, the ability is equivalent to the system of Fig. 3 in which a processor with address (j, i) performs a rightward data transfer to a processor with address (j, i+1), leftward transfer to a processor at (j, i-1), upward transfer to a processor at (j-1, i), and downward transfer to a processor at (j+1, i). The following examines the relationship between

- 15 -

0147857

the addresses (j, i) and (j', i').

(a) Data transfer to the right-hand processor

Setting the amount of shift $\ell = 1$ in equations (5) and (6), any value of $\underline{i}$ ranging:

$$I - 2 \geq i \geq 0 \qquad \ldots \ldots (7)$$

meets $\qquad i' = i+1 \text{ and } j' = j \qquad \ldots \ldots (8)$

Equations (8) are satisfied for processors 3-2(k) and 3-2(k+$\ell$) that have values of $\underline{i}$ in the range specified by equation (7). The case of $\ell = 1$ is that the contents of processors with their addresses satisfying equation (7) among processor array of J x I are moved together to processors having originating addresses incremented by one in the direction of I, i.e., right shift.

(b) Data transfer to the left-hand processor

Setting the amount of shift $\ell = Ij-1$ (or n-1) in equations (5) and (6), any value of $\underline{i}$ ranging:

$$I - 1 \geq i \geq 1 \qquad \ldots \ldots (9)$$

meets $\qquad i' = i-1 \text{ and } j' = j \qquad \ldots \ldots (10)$

In this case, the contents of all processors are moved in the -I direction by one step, i.e., left shift.

(c) Data transfer to the lower processor

Setting the amount of shift $\ell = J$ in equations (5) and (6), any value of $\underline{j}$ ranging:

$$J - 2 \geq j \geq 0 \qquad \ldots \ldots (11)$$

meets $\qquad i' = i \text{ and } j' = j+1 \qquad \ldots \ldots (12)$

0147857

The contents of all processors are moved together to processors having originating addresses incremented by one in the J direction, i.e., down shift.

(d)  Data transfer to the upper processor

Setting the amount of shift $\ell = I(J-1)$ in equations (5) and (6), any value of $\underline{j}$ ranging:

$$J - 1 \geq j \geq 1 \qquad \dots\dots(13)$$

meets $\qquad i' = i \text{ and } j' = j-1 \qquad \dots\dots(14)$

The contents of all processors are moved together to processors having originating addresses incremented by one in the -J direction, i.e., up shift.

As will be appreciated from the above description, the arrangement of Fig. 3 is capable of the same inter-processor data transfer as of the conventional system shown in Fig. 1.

The amount of shift $\ell$ is controlled by the ring bus controller 3-6 in Fig. 3, whose operation will be described in detail using Fig. 5.  The ring bus controller 3-6 shown in Fig. 5 includes a rewritable memory (or register) 5-1 which stores the amount of shift $\ell$ provided by the central control unit 3-1.

Initially, the central control unit 3-1 defines the dimensions I and J of the processor array used for data processing, and then calculates the amount of shift.

Shift directions are defined as follows:

Shift direction 0 for the I direction,

Shift direction 1 for the -J direction,

Shift direction 2 for the -I direction, and

Shift direction 3 for the J direction

The amounts of shift of the above example of data transfer for the shift directions 0, 1, 2 and 3 are:

$$1, \; I(J - 1), \; IJ - 1, \; \text{and} \; J$$

In order for the ring bus controller 3-6 to provide clocks more by one than the value set in the register 5-1 onto signal line 3-8, the register 5-1 is set with actual shift values subtracted by one.  The register 5-1 has addresses 0, 1, 2 and 3 for storing shift values of shift directions 0, 1, 2 and 3, respectively, and receives the address signal on bus 5-2, shift data on bus 5-3 and the write strobe signal on line 5-4.

The data shift operation among processors is as follows.

The central control unit 3-1 places a direction number of shift to be implemented (0, 1, 2 or 3) on the address bus 5-2.  The register 5-1, which is in read mode unless it receives the write strobe on line 5-4, outputs the shift value on bus 5-5 corresponding to the shift direction.  The shift value is set in the sub-1 counter 5-7 in response to the shift start strobe on line 5-6, and at the same time the shift mode flag flip-flop 5-8 is set, causing its positive output ("1") on line 5-9 to enable the gate 5-10.  Then, the ring bus shift clock is produced on line 3-? from the shift clock on line 5-11. The ring bus shift clock is also used to clock the sub-1 counter 5-7, which decrements its contents by one upon reception of each clock. The sub-1 counter 5-7 provides a zero-check signal of "0" on line 5-12 when it is empty, otherwise the signal stays "1". The shift mode flip-flop 5-8 is enabled by the trigger input on line 5-11 to enter the zero-check signal. In this case, the S or R input to the flip-flop 5-8 takes precedence over the D input for the zero-check signal. The shift mode flip-flop 5-8 is normally reset by the clear signal applied to the R input through line 5-13, and it is set by the shift start strobe on 5-6 applied to its S input. Thereafter, the state of the flip-flop 5-8 reflects the reception of the zero-check signal 5-12 at the trigger input sent from the central control unit 3-1. Since the zero-check signal 5-12 stays "1" until the sub-1 counter 5-7 provides a 0's output, the flip-flop 5-8 does not change the state by the T input. Accordingly, the shift clock signal 5-11 produced by the gate 5-10 in response to the positive output of the flip-flop 5-8 is sent out directly to the ring bus unit 3-3. This signal is also supplied to the sub-1 counter 5-7, and its contents is decremented by one. Assuming that the sub-1 counter 5-7 is set to Z, the shift mode flip-flop 5-8 receives Z clock pulses until the counter provides "0" output, plus one clock pulse used to reset the shift mode flip-flop 5-8, and a total of Z+1 clock pulses are sent to the ring bus unit 3-3. The zero-check signal 5-12 is also used as a shift end request signal issued by the ring bus controller 3-6 to the central control unit 3-1. The ring bus controller 3-6 produces shift clock pulses in number set in the sub-1 counter 5-7 plus one. On this account, the register 5-1 for storing the shift value in each direction needs to be preset with values smaller by one than the amount of shift. These are the arrangement and operation of the ring bus controller 3-6. Through this arrangement, a processor array with variable array structure, such as 1 x n, 2 x n/2, ..., I x J, ..., n x 1 provided that two numbers in pair factorize the number of processors $\underline{n}$, can be formed.

There are restrictions shown by equations (7), (9), (11) and (13) in this method of data shift. These restrictions are based on that, for example, the contents of processor at (0, I-1) are moved to tne processor at (1, 0) by the operation for shift direction 0. To avoid this in the operation of shift direction 0, the processor with a column address of I-1 needs to set a predetermined boundary value in the ring bus node register, or the processor with a column address of 0 needs to halt the reading of ring bus node register and produce a boundary value by itself. In any case, each processor needs to check as to whether it is located at the boundary depending on the shift direction, and to change the operation accordingly.

This can readily be carried out, since each processor stores its address (j, i). The following describes one example of this operation. Each processor 3-2(k) is adapted to take one of the following two operations.

(i) Save data in the node register 3-4(k) and, after the shift operation through the ring bus 3-5, retrieve the data from the node register.

(ii) Save data in the node register 3-4(k) and set up a boundary value by itself instead of restoring the saved data.

The processor, in advance, makes reference to its address registers 3-13(k) and 3-14(k) to determine which operation (i) or (ii) should be taken depending on the shift direction. Then, the processor carries out the operation (i) or (ii) depending on the above decision when the shift direction is actually indicated. In practice, the operation (ii) is taken by processors with column address 0 for shift direction 0, processors with row address J-1 for shift direction 1, processors with column address I-1 for shift direction 2, and processors with row address 0 for shift direction 3. The operation (i) is taken by the remaining processors. The ring bus node register 3-4(k) has at least two kinds of data input, i.e., from the corresponding processor and from the previous node register on the ring bus.

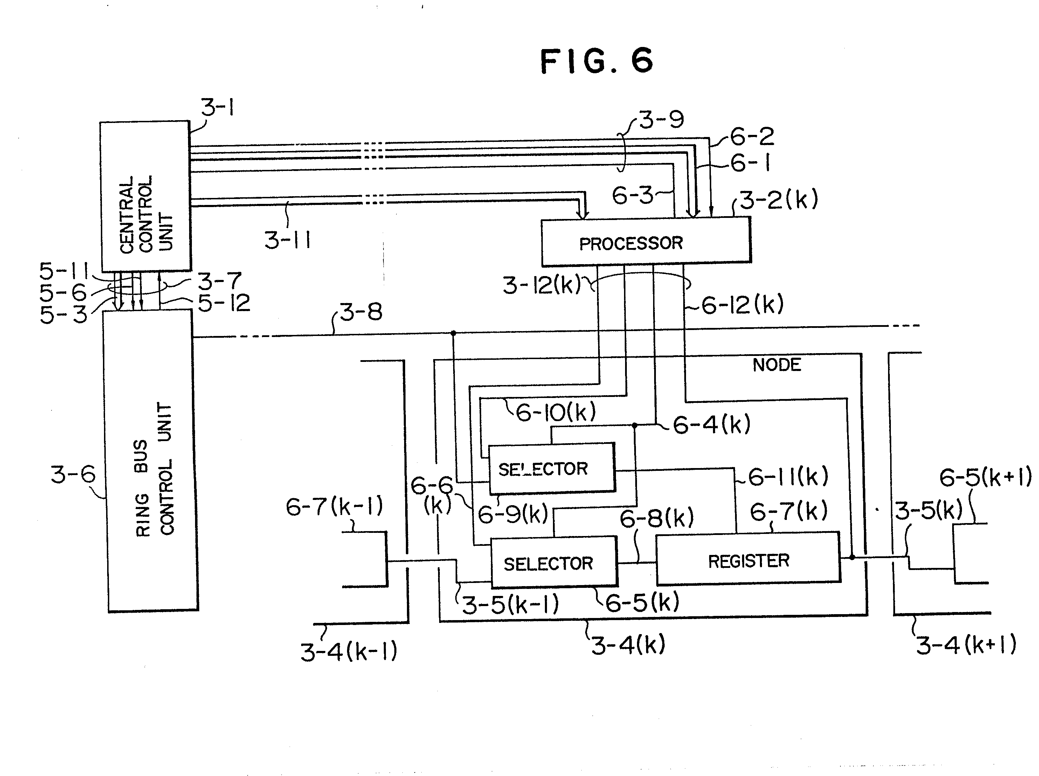

Fig. 6 shows in detail the node register 3-4(k) and its peripheries including the processor 3-1(k), central control unit 3-1 and ring bus control unit 3-6. The central control unit 3-1 places an operational command on part 6-1 of the control bus 3-9 and issues a strobe signal on part 6-2 of the control bus 3-9. At this time, the address bus 3-11 is set to indicate that the command is sent to all processors. Each processor 3-2(k) decodes the command and carries out the specified operation. Activation of all processors may be implemented using a special signal line, instead of using the address bus.

Upon completion of the specified operation, it is indicated to the central control unit 3-1 through a signal line 6-3 in the control bus 3-9. The signal line 6-3 is commonly used by several processors and this signal is produced when all of these processors have completed their operations. One example of the circuit arrangement is the parallel connection of open-collector outputs of processors so that the signal goes "1" upon completion of all processors. In response to this signal, the central control unit 3-1 issues a command to each processor 3-2(k) to indicate the output of necessary information to the node register 3-4(k). All processors responds to this command to transfer data to respective node registers 3-4(k). In this case, the signal line 6-4(k) is made active so that the selector 6-5(k) selects the input 6-6(k) from the processor and the input 6-8(k) of the node register 6-7(k) is connected to the processor 3-2(k). At the same time, the selector 6-9(k) selects the output strobe pulse on 6-10(k) provided by the processor 3-2(k) and sends it to the node register 6-7(k). In response to

0147857

this strobe signal, the register 6-7(k) stores data at input 6-8(k). After that, the processor 3-2(k) deactivates the signal line 6-4(k) and switches data 6-8(k) and strobe 6-11(k) to the node register 6-7(k) to the ring bus line 3-5(k-1) and ring bus shift clock line 3-8. Then, the processor indicates the end of operation to the central control unit 3-1 in the same way as mentioned above.

Subsequently, the central control unit 3-1 indicates the shift operation to the ring bus control unit 3-6 using signal lines 3-7 that carry the shift direction 5-3, shift start strobe 5-6 and shift clock 5-11 as shown in Fig. 5. Through these operations, the specified number of shift clock signals are sent to the node register 3-4(k) over the ring bus shift clock line 3-8.

The ring bus shift clock signal is supplied to each node register 6-7(k). The register 6-7(k) stores data from the node register 6-7(k-1) at the left of the input 6-5(k) in response to this clock signal. At the same time, data which has been stored in the register 6-7(k) is sent through the output line 6-5(k+1) and stored in the right-hand node register 6-7(k+1). These operations are repeated each time the ring bus shift clock is generated. After ring bus shift clock signals equal in number to the shift value have been sent, the operation end signal is transmitted to the central control unit 3-1 over the signal line 5-12. The central control unit 3-1 responds to this signal to issue the command to each processor 3-2(k) to fetch data from the associated node register 6-7(k). Then, each processor 3-2(k) executes the command. In this case, if the command includes the shift direction, some of processors fetch data 6-12(k) (same as 3-5(k)) from the node register 6-7(k) and sets up the boundary value at first by carrying out one of the above-mentioned two operations (i) and (ii).

To carry out the inter-processor data transfer successively, the central control unit 3-1 directs the processor 3-2(k) with commands indicating the operations of fetching data from the node register 6-7(k) and, following the specified operation, loading the node register 6-7(k) with the next data. The central control unit 3-1 issues a command indicating the shift direction to the ring bus controller 3-6. Thereafter, the central control unit 3-1 conducts the completion signal 6-3 from the processor 3-2(k) directly to the shift start strobe signal line 5-6 to the ring bus control unit 3-6, and conducts the shift end signal 5-12 from the ring bus controller 3-6 directly to the strobe line 6-2 to the processor 3-2(k). In this case, the operation of data transfer from the processor 3-2(k) to the node register 6-7(k) and the operation of fetching the contents of node register 6-7(k) to the processor 3-2(k) are carried out at the beginning and end of the above-mentioned operations. Needless to say, a processor 3-2(k) which needs the setup of boundary value does not fetch data from the node register 6-7(k), but operates to set up a boundary value. Processors which do not need data transaction with any other processor may be left operating independently with their completion signal placed on the signal line 6-3, provided that their operations do not disturb the data transfer operation on the ring bus.

Although in the foregoing description the signal for selecting data input 6-6(k) to the node register 3-4(k) and the strobe input 6-10(k) is provided by the processor 3-2(k), this signal may be provided by the ring bus control unit 3-6, since this control is common to every node register 3-4(k) on the ring bus. In this case, the signal may be produced by inverting the output 5-9 of the shift mode flip-flop.

The present invention is also applicable to a processor array with a bidirectional ring bus.

According to the present invention, a plurality of processors connected in a ring configuration operate equivalently to a parallel data processing system with a processor array, and moreover the arrangement of the processor array can be changed by the program. In consequence, array structures which meet various processing of 2-dimensional data, such as image data, from a simple pixelwise processing to a complex process such as distance transformation can be realized, and the speed-up of process can also be achieved.

CLAIMS:

1. A parallel data processing system comprising:

control means (3-1);

a plurality of processors (3-2) performing processes specified by said control means; and

ring bus means (3-3) including a plurality of memory means (3-4) provided in correspondence to said processors and adapted to transfer data with corresponding processors, and data shift means (3-5) connecting said memory means in a ring configuration and operating to transfer data stored in said memory means along said data shift means, said processors performing respective processes by making reference to data transferred to corresponding memory means.

2. A system according to claim 1, wherein said shift means comprises means (3-6) for controlling the number of shift operations in accordance with a command issued by said control means.

3. A system according to claim 1, wherein said plurality of memory means comprises means (6-5) for controlling as to which one of data from said corresponding processors or data from adjoining memory means is to be stored in accordance with an indication from corresponding processors.

4. A system according to claim 1, wherein said plurality of processors are given addresses, and wherein said processors are controlled so that they are inhibited from using, for processing, data transferred from corresponding processors based on addresses given to said processors.

5. A system according to claim 4, wherein addresses given to said processors are set up by said control means.

6. A system according to claim 1, wherein said ring bus means operates to transfer data in said plurality of memory means in one direction.

7. A system according to claim 1, wherein said ring bus means operates to transfer data in said plurality of memory means in both directions.

8. A system according to claim 1, wherein said control means performs control such that data in 2-dimensional arrangement is partitioned into a plurality of 2-dimensional data arrays and supplied to said processors for processing.

9. A system according to claim 8, wherein said control means partitions said 2-dimensional data into 2-dimensional data arrays of J in number of rows and I in number of columns, so that each partitioned data array is processed by a processor.

10. A system according to claim 9, wherein said control means indicates the number of shift operations of said shift means based on the number of rows J and number of columns I of partitioning.

11. A system according to claim 8, wherein said shift means comprises register means (5-1), and wherein said control means operates on said memory means by indicating the address of said register means to store the number of shift operations for transacting data to said register means corresponding to processors processing adjoining partitioned 2-dimensional data array basing on the number of rows J and columns I of partitioning of said 2-dimensional data.

12. A system according to claim 11, wherein said register means stores values defined by the number of shift operations: 1, I (J-1), IJ-1 and J.

13. A system according to claim 8, wherein said partitioned 2-dimensional data arrays include marginal portions overlapping with each other.

14. A system according to claim 8, wherein said 2-dimensional data comprises image data.

1/5

# FIG.1
# PRIOR ART

FIG. 2
PRIOR ART

2/5

0147857

# FIG. 3

FIG. 3 — Block diagram including CENTRAL CONTROL UNIT (3-1), PROCESSOR (0), PROCESSOR (k), PROCESSOR (k+1), PROCESSOR (n-1), NODE (0), NODE (k), NODE (k+1), NODE (n-1), RING BUS (3-3), and RING BUS CONTROL UNIT (3-6).

Reference labels: 3-1, 3-2(0), 3-2(k), 3-2(k+1), 3-2(n-1), 3-3, 3-4(0), 3-4(k), 3-4(k+1), 3-4(n-1), 3-5, 3-5(k), 3-6, 3-7, 3-8, 3-9, 3-10, 3-11, 3-12(0), 3-12(k), 3-12(k+1), 3-12(n-1), 3-13(0), 3-13(k), 3-13(k+1), 3-13(n-1), 3-14(0), 3-14(k), 3-14(k+1), 3-14(n-1), 3-15, 3-16, 3-17

# FIG. 4

# FIG. 5

# FIG. 6